Europäisches Patentamt

European Patent Office

Office européen des brevets

(19)

(11) **EP 1 592 165 A1**

(12) **DEMANDE DE BREVET EUROPEEN**

(43) Date de publication:
02.11.2005 Bulletin 2005/44

(51) Int Cl.⁷: **H04L 9/06**

(21) Numéro de dépôt: **04009796.6**

(22) Date de dépôt: **26.04.2004**

| | |
|---|---|
| (84) Etats contractants désignés:<br>**AT BE BG CH CY CZ DE DK EE ES FI FR GB GR HU IE IT LI LU MC NL PL PT RO SE SI SK TR**<br>Etats d'extension désignés:<br>**AL HR LT LV MK** | (72) Inventeurs:<br>• **Friaa, Ahmed**<br>  **1013 Tunis (TN)**<br>• **Bouhoula, Adel**<br>  **2070 La Marsa (TN)** |
| (71) Demandeurs:<br>• **Friaa, Ahmed**<br>  **1013 Tunis (TN)**<br>• **Bouhoula, Adel**<br>  **2070 La Marsa (TN)** | (74) Mandataire: **Bolinches, Michel Jean-Marie et al**<br>**Cabinet Orès**<br>**36, rue de St Pétersburg**<br>**75008 Paris (FR)** |

(54) **Méthode de cryptographie basée sur des k-cubes particuliers et utilisation de ces k-cubes en cryptographie**

(57)    L'invention concerne une méthode de cryptographie, notamment symétrique, comprenant essentiellement les étapes suivantes :

(i) transformation d'un texte initial en un texte binaire et division de celui-ci en un nombre N de paquets ;
(ii) construction, à partir d'un nombre réduit de données, d'au moins deux k-cubes d'ordre n, les n éléments de chaque rangée de chacun de ces k-cubes devant vérifier une relation prédéfinie ;
(iii) génération de permutations dynamiques à partir de ces k-cubes, ces permutations pouvant être simples, compressives ou expansives;
(iv) construction d'un texte chiffré par l'application d'une opération masque sur chaque paquet, avec chaînage éventuel et application des permutations obtenues en (iii) avant et après l'opération masque.

L'invention concerne également une utilisation en cryptographie de tels k-cubes d'ordre n.

$$Q^1_{k.s} \qquad Q^2_{k.s}$$

**Fig. 4**

**EP 1 592 165 A1**

## Description

La présente invention concerne une méthode de cryptographie, notamment symétrique, ainsi qu'une utilisation de k-cubes particuliers d'ordre n en cryptographie.

La plupart des méthodes connues de cryptographie font appel à des permutations d'ensembles finis, à différents stades de leur mise en oeuvre. Ces permutations sont souvent choisies parmi un ensemble de permutations consignées dans des tables publiques de permutations préétablies. On dit alors qu'il s'agit de permutations statiques. Celles-ci, bien qu'introduisant une certaine souplesse dans l'implémentation des algorithmes associés, peuvent constituer des points de faiblesse, au regard de la sécurité souhaitée de ces méthodes.

Les permutations dynamiques (i.e. dépendant de paramètres variables selon le choix de l'utilisateur) présentent en effet l'inconvénient de conduire, en général, à des longueurs de clés pénalisantes.

Le but de la présente invention est précisément de proposer une méthode de cryptographie, notamment à clés symétriques, qui soit particulièrement simple à mettre en oeuvre et qui soit basée, entre autres, sur le recours systématique à des permutations dynamiques obtenues à partir de paires de k-cubes convenablement choisis.

A cet effet, la méthode de cryptographie selon l'invention comprend essentiellement les étapes suivantes :

(i) transformation d'un texte initial en un texte binaire et division de celui-ci en un nombre N de paquets ;
(ii) construction, à partir d'un nombre réduit de données, d'au moins deux k-cubes d'ordre n, les n éléments de chaque rangée de chacun de ces k-cubes devant vérifier une relation prédéfinie ;
(iii) génération de permutations dynamiques à partir de ces k-cubes, ces permutations pouvant être simples, compressives ou expansives ;
(iv) construction d'un texte chiffré par l'application d'une opération masque sur chaque paquet, avec chaînage éventuel et application des permutations obtenues en (iii) avant et après l'opération masque.

On notera que ces k-cubes d'ordre n vérifiant une relation prédéfinie et dont la construction est systématique constituent un apport essentiel dans la méthode de la présente invention.

On notera également que la construction de ces k-cubes ne nécessite qu'un petit nombre de données, allégeant par là même la longueur des clés, tout en conférant une sécurité accrue à la méthode de cryptographie.

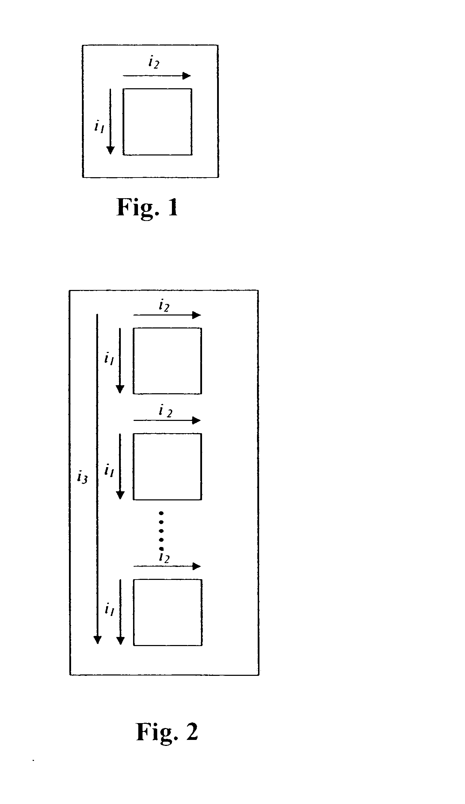

On désigne dans la présente description par k-cube d'ordre n, une généralisation dans des espaces de dimension k des carrés et des cubes d'ordre n (k = 2 et k = 3, respectivement) illustrés aux figures 1 et 2 jointes.

Un k-cube d'ordre n consiste donc à se donner $n^k$ cases définies par leurs coordonnées $(i_1, i_2, ..., i_k)$, chaque $i_j$ (coordonnée d'ordre j) variant de 1 à n. On représente un k-cube d'ordre n par $n^{k-2}$ carrés d'ordre n, obtenus en faisant varier chacune des coordonnées $i_3, ...i_k$ de 1 à n. On convient de représenter graphiquement ces carrés en plaçant verticalement les coordonnées de rang impair et horizontalement les coordonnées de rang pair. D'autres représentations sont bien entendu envisageables.

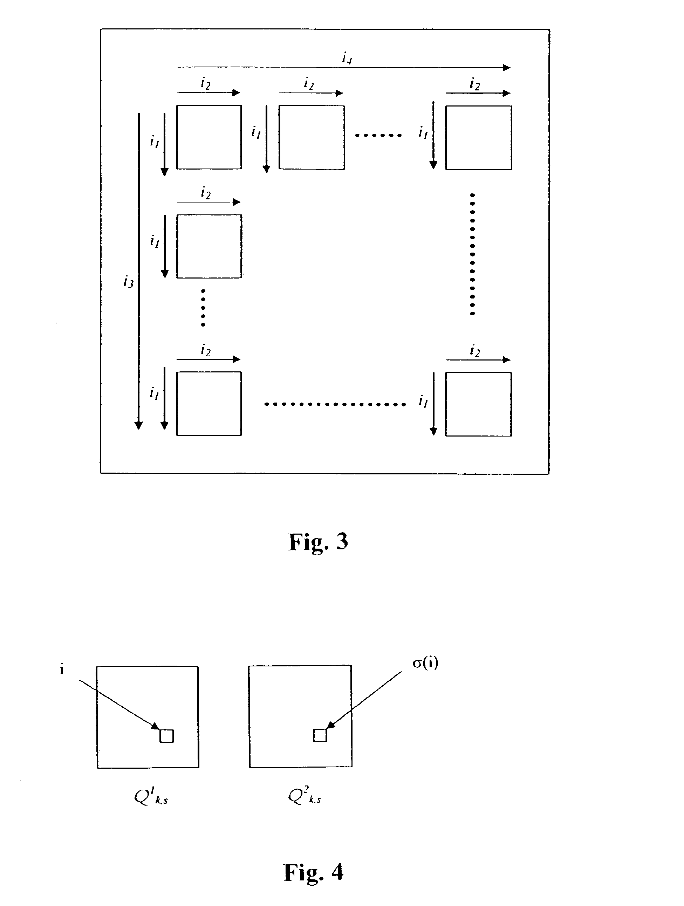

On a illustré à la figure 3 jointe un exemple de k-cubes d'ordre n avec k = 4, i.e. de 4-cubes d'ordre n (en d'autres termes, il s'agit d'un cube dans $R^4$).

On appelle rangée d'un k-cube d'ordre n, tout ensemble de n cases ayant (k-1) coordonnées identiques. On compte donc $k.n^{k-1}$ rangées différentes dans un k-cube d'ordre n. On appelle sommet du k-cube une case dont chaque coordonnées vaut 1 ou n. On compte donc $2^k$ sommets dans un k-cube d'ordre n. On note que ce nombre est indépendant de l'ordre n. On appelle diagonale principale d'un k-cube d'ordre n, l'ensemble des cases dont les coordonnées sont obtenues à partir des coordonnées d'un sommet en ajoutant à celles-ci le nombre $\varepsilon.\alpha$, où $\varepsilon = 1$ si la coordonnée du sommet vaut 1 et $\varepsilon = -1$ si cette coordonnée vaut n, $\alpha$ étant un entier variant de 0 à n-1. On compte donc $2^{k-1}$ diagonales principales dans un k-cube d'ordre n. On appelle k-cube normal d'ordre n, un k-cube dont les cases sont remplies des nombres entiers de 1 à $n^k$. Cela revient à associer à chaque case $(i_1, i_2, ..., i_k)$ un entier $x_{i1\,i2\,...\,ik}$ compris entre 1 et $n^k$, qu'on appelle élément du k-cube.

Selon un mode préférentiel de réalisation de l'invention, ladite relation prédéfinie consiste à affecter une valeur constante au résultat d'une opération algébrique reliant entre eux les éléments de chaque rangée de chacun desdits k-cubes. Cette opération algébrique est de préférence une addition desdits éléments de chaque rangée et éventuellement de chaque diagonale des k-cubes. On dit alors dans ces cas que les k-cubes sont semi-magiques (i.e. la somme des éléments d'une même rangée vaut une valeur constante) ou magiques (i.e. en plus la somme des éléments de chaque diagonale principale vaut aussi cette valeur constante).

Selon une autre caractéristique de l'invention, ladite méthode de cryptographie peut être telle que l'étape (iv) comprend successivement :

(iva) l'application d'une permutation simple, expansive ou compressive aux paquets résultant de l'étape (i),
(ivb) l'application d'une opération masque à l'ensemble des paquets chiffrés et permutés obtenus en (iva) par une addition modulo 2,

(ivc) l'application d'une permutation simple aux paquets chiffrés obtenus en (ivb),

(ivd) une décomposition des paquets chiffrés obtenus en (ivc) en blocs numérotés,

(ive) le chaînage desdits blocs (i.e. interdépendance des blocs), et

(ivf) une permutation finale desdits blocs et l'obtention du texte chiffré.

Selon une caractéristique préférentielle de l'invention, l'étape (iv) comprend d'une manière générale l'application de permutations expansives à partir desdits k-cubes de manière à engendrer, à partir d'un bloc de q bits, un bloc de q+t bits formé par une permutation des q bits avec l'ajout de t bits d'une manière complètement aléatoire.

Une utilisation selon l'invention de k-cubes d'ordre n (k : entier naturel $\geq$ 2 et n : entier naturel $\geq$ 3), chaque k-cube comportant $k.n^{k-1}$ rangées de n nombres chacune, les n nombres de chaque rangée à (k-1) coordonnées identiques vérifiant ladite relation prédéfinie, consiste à utiliser lesdits k-cubes en cryptographie, notamment en cryptographie symétrique.

De préférence, ladite utilisation selon l'invention est telle que les nombres de chaque rangée de chacun desdits k-cubes vérifient ladite relation par une valeur constante du résultat d'une opération algébrique les reliant entre eux, ladite opération algébrique étant à titre encore plus préférentiel une addition desdits nombres (de 1 à $n^k$) de chaque rangée et optionnellement de chaque diagonale de k-cube, de telle manière que ladite valeur constante soit égale à n ($n^k$ + 1) / 2, les k-cubes étant alors semi-magiques ou magiques.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :

la figure 1 est une représentation symbolique de carrés d'ordre n au moyen de coordonnées $i_1$ et $i_2$,

la figure 2 est une représentation symbolique de cubes d'ordre n au moyen de coordonnées $i_1$, $i_2$ et $i_3$,

la figure 3 est une représentation symbolique de 4-cubes d'ordre n au moyen de coordonnées $i_1$, $i_2$, $i_3$ et $i_4$, et

la figure 4 illustre la génération d'une permutation dynamique à partir de deux k-cubes d'ordre n selon l'invention.

La donnée de 2 k-cubes d'ordre s, $Q^1_{k,s}$ et $Q^2_{k,s}$, fournit une permutation naturelle des entiers [1 .. $s^k$]. A cet effet, on fait correspondre à tout entier i $\in$ [1 .. $s^k$] l'entier qui se trouve dans la même case de $Q^2_{k,s}$ qui contient l'élément i dans $Q^1_{k,s}$. En particulier, la donnée de $Q^1_{k,s}$ et $Q^2_{k,s}$ fournit également une permutation de [1..I] pour tout I $\leq s^k$. En effet, soit $\sigma$ une permutation de [1 .. $s^k$], on peut en déduire une permutation $\tilde{\sigma}$ de [1 .. I] avec I $\leq s^k$, par exemple de la manière suivante :

Soit S = {j $\in$ [1 .. $s^k$] |$\sigma$(j) $\leq$ I}

■ $\tilde{\sigma}$(1) = $\sigma$($i_1$), avec $i_1$ = inf (S)

■ Pour $\lambda \in$ [2..I] : $\tilde{\sigma}$($\lambda$) = $\sigma$($i_\lambda$), avec $i_\lambda$ = inf (S - {$i_1$, $i_2$, ..., $i_{\lambda-1}$})

La figure 4 illustre cette permutation dynamique $\sigma$ de [1 .. $s^k$].

On notera que la propriété liée au caractère « magique » ou « semi-magique » de ces k-cubes fait que de légères modifications au niveau des données de base introduisent en général de grandes transformations dans l'ordonnancement des éléments dans ces k-cubes.

**<u>Exemple de mise en oeuvre d'une méthode de cryptographie selon l'invention</u>** :

**<u>1 ) Données</u>** :

➢ N : Longueur d'un paquet.

➢ d : d $\leq$ N taille du dernier paquet du texte (binaire) en clair.

➢ n, k : paramètres des k-cubes ( n $\geq$ 3, k $\geq$ 2 et N $\leq$ $n^k$)

➢ m $\geq$ 3 : m "petit".

➢ $\sigma^{0,m}$, $\sigma^{1,m}$,$\sigma^{2,m}$ 3 permutations de *[1..m]*.

➢ $\alpha$ : nombre d'itérations (vérifiant $(m + \alpha)^k \geq n$) pour avoir 3 permutations de [1..*n*].

➢ K : mot aléatoire à L bits.

➢ p : entier "petit".

**2) Etapes préliminaires** :

**Etape 1** :

- On part d'un texte clair *T* et on le transforme en texte binaire *T*.'
- On divise *T*' en paquets de longueur *N* bits (le dernier paquet en compte *d*).

**Etape 2** :

A partir de : $n$, $k$, $m$, $\sigma^{0,m}$, $\sigma^{1,m}$, $\sigma^{2,m}$ et $\alpha$, on construit :

- $Q^0_{k,n}$ : k-cube « témoin »
- $Q^1_{k,n}$ : k-cube « directeur »
- $Q^2_{k,n}$ : k-cube « adjoint »

A chaque $\sigma^{i,m}$ pour $i \in [0..2]$, on associe un k-cube $Q^i_{m,k}$. On obtient alors 3 k-cubes d'ordre $m$. Pour $m' \leq m^k$, on peut alors définir 3 permutations de $[1..m]$ comme indiqué ci-dessus en référence à la permutation $\sigma$ de $[1 .. s^k]$.

On réitère $\alpha$ fois ce processus :

$$\sigma^{0,m},\ \sigma^{1,m},\ \sigma^{2,m} \xrightarrow{\ (\ 1\ )\ } \sigma^{0,m+1},\ \sigma^{1,m+1},\ \sigma^{2,m+1} \xrightarrow{\ (\ 2\ )\ } \ldots$$

$$\xrightarrow{\ (\ \alpha\ )\ } \sigma^{0,m+\alpha},\ \sigma^{1,m+\alpha},\ \sigma^{2,m+\alpha}.$$

On en déduit $\sigma^{0,n}$, $\sigma^{1,n}$, $\sigma^{2,n}$. On aboutit alors à 3 permutations de *[1..n]* qui donnent les 3 k-cubes $Q^0_{k,n}$, $Q^1_{k,n}$, $Q^2_{k,n}$.

**Etape 3** :

Soit

$$q = \left[ \frac{n^k}{L} \right]$$

(où [ ] désigne la partie entière). On définit par récurrence la suite $\{K_i\}_{i\in[O...q]}$ comme suit :

- On pose $K_0 = K$
- $K_{i+1}$ est alors défini à partir de $K_i$ par :
  (soit $e$ l'entier se trouvant à la case $i.L$ de $Q^2_{k,n}$)
  $K_{i+1} = K_i \curvearrowleft (e \bmod p)$ si $e$ est pair
  $K_{i+1} = K_i \curvearrowright (e \bmod p)$ si $e$ est impair,
      où $A \curvearrowleft b$ désigne la rotation à gauche du mot $A$ de $b$ bits
      et $A \curvearrowright b$ désigne la rotation à droite du mot $A$ de $b$ bits.

On construit comme suit le *k-cube* « masque » $\Sigma_{k,n}$ :
on place dans la case de $Q^2_{k,n}$ portant le nombre x le bit n° r de $K_i$ tel que : $x = L.i + (r - 1)$ pour $1 \leq r \leq L$.

**3) Construction du cryptogramme** :

**3.1) Traitement d'un paquet** :

La méthode de chiffrement d'un paquet comporte 3 étapes :

**Etape 1** :

■ Les bits du paquet étant numérotés de *1* à *N*, on place le bit n° *i* dans le case de $Q^0_{k,n}$ portant le nombre *i*.
■ On complète les cases restantes de $Q^0_{k,n}$ (dans le cas où N < $n^k$ ou dans le cas du dernier paquet s'il contient moins de *N* bits) d'une manière aléatoire.
■ Une fois cette opération terminée, on aboutit à un *k-cube* $Q'_{k,n}$ rempli de *0* ou de *1*.

**Etape 2** :

$Q''_{k,n} = Q'_{k,n} \oplus \Sigma_{k,n}$ où $\oplus$ est la somme modulo 2 et où $\Sigma_{k,n}$ est le k-cube « masque » d'ordre n.

**Etape 3 :**

On construit le paquet chiffré de longueur $n^k$ en procédant de la manière suivante :

on place dans la i$^{\text{ème}}$ position de ce paquet le bit de $Q''_{k,n}$ situé dans la case portant le nombre *i* dans le k-cube directeur $Q^1_{k,n}$ déjà introduit.

**3.2) Construction du texte chiffré :**

On construit le texte chiffré de la manière suivante :

■ Après le traitement de chaque paquet, comme indiqué plus haut, les paquets chiffrés sont placés dans leur ordre initial, et l'on obtient alors un texte binaire *T*''.
■ *T*'' est subdivisé en blocs de $n^2$ bits, ceux-ci étant numérotés de *1* à s, soit des blocs $b_1$ à $b_s$.
■ Soit V un bloc formé par les $n^2$ bits du k-cube masque $\Sigma_{k,n}$ se trouvant dans les cases portant les nombres de *1* à $n^2$ dans le k-cube directeur $Q^1_{k,n}$. On génère la suite $\{b'_i\}_{i\in[1\,\dots\,s]}$ de la manière suivante :

- $b'_1 = b_1 \oplus V$
- $b_{i+1} = b_i+_1 \oplus b'_i$ pour $i \in [1...s-1]$.

■ soit

$$r = \left\lceil \frac{s}{n^k} \right\rceil.$$

On définit la suite $\{I_i\}_{i\in[0..r]}$ comme suit :

- pour $j \in [0 \dots (r-1)]: I_j = [(j.n^k + 1) \dots (j + 1). n^k]$
- $I_r = [(r.n^k+1)..s]$

■ Soit $B'_{Ij}$ le résultat du placement des blocs $\{b'_i\}_{i\in Ij}$ dans l'ordre fourni par la permutation donnée par $Q^0_{k,n}$ et $Q^1_{k,n}$.
■ Le texte chiffré est formé par la concaténation de la suite $\{B'_{I0}, B'_{I1}....B'_{Ir}\}$.

**Revendications**

1. Méthode de cryptographie, notamment symétrique, comprenant essentiellement les étapes suivantes :

(i) transformation d'un texte initial en un texte binaire et division de celui-ci en un nombre N de paquets ;
(ii) construction, à partir d'un nombre réduit de données, d'au moins deux k-cubes d'ordre n, les n éléments de chaque rangée de chacun de ces k-cubes devant vérifier une relation prédéfinie ;
(iii) génération de permutations dynamiques à partir de ces k-cubes, ces permutations pouvant être simples, compressives ou expansives;

(iv) construction d'un texte chiffré par l'application d'une opération masque sur chaque paquet, avec chaînage éventuel et application des permutations obtenues en (iii) avant et après l'opération masque.

**2.** Méthode de cryptographie selon la revendication 1, **caractérisée en ce que** ladite relation prédéfinie consiste à affecter une valeur constante au résultat d'une opération algébrique reliant entre eux les nombres de chaque rangée de chacun desdits k-cubes.

**3.** Méthode de cryptographie selon la revendication 2, **caractérisée en ce que** ladite opération algébrique est une addition desdits nombres de chaque rangée, de telle manière que lesdits k-cubes soient au moins semi-magiques.

**4.** Méthode de cryptographie selon la revendication 2 ou 3, **caractérisée en ce que** ladite relation prédéfinie consiste également à affecter ladite valeur constante au résultat d'une opération algébrique reliant entre eux les nombres de chaque diagonale principale de chacun desdits k-cubes, de telle manière que lesdits k-cubes soient magiques.

**5.** Méthode de cryptographie selon une des revendications précédentes, **caractérisée en ce que** l'étape (iv) comprend successivement :

(iva) l'application d'une permutation simple, expansive ou compressive aux paquets résultant de l'étape (i),
(ivb) l'application d'une opération masque à l'ensemble des paquets chiffrés et permutés obtenus en (iva) par une addition modulo 2,
(ivc) l'application d'une permutation simple aux paquets chiffrés obtenus en (ivb),
(ivd) une décomposition des paquets chiffrés obtenus en (ivc) en blocs numérotés,
(ive) le chaînage desdits blocs, et
(ivf) une permutation finale desdits blocs et l'obtention du texte chiffré.

**6.** Méthode de cryptographie selon la revendication 5, **caractérisée en ce que** l'étape (iv) comprend l'application de permutations expansives à partir desdits k-cubes de manière à engendrer, à partir d'un bloc de q bits, un bloc de q+t bits formé par une permutation des q bits avec l'ajout de t bits d'une manière complètement aléatoire.

**7.** Utilisation en cryptographie de k-cubes d'ordre n (k : entier naturel $\geq$ 2 et n : entier naturel $\geq$ 3), chaque k-cube comportant $k.n^{k-1}$ rangées de n nombres chacune, les n nombres de chaque rangée à (k-1) coordonnées identiques vérifiant une relation prédéfinie.

**8.** Utilisation de k-cubes selon la revendication 7, **caractérisée en ce que** les nombres de chaque rangée de chacun desdits k-cubes vérifient ladite relation par une valeur constante du résultat d'une opération algébrique les reliant entre eux.

**9.** Utilisation de k-cubes selon la revendication 8, **caractérisée en ce que** ladite opération algébrique est une addition desdits nombres de chaque rangée et optionnellement de chaque diagonale de k-cube, de telle manière que lesdits k-cubes soient semi-magiques ou magiques.

**10.** Utilisation de k-cubes selon une des revendications 7 à 9 en cryptographie symétrique.

Fig. 1

Fig. 2

**Fig. 3**

**Fig. 4**

**Office européen**
**des brevets**

**RAPPORT DE RECHERCHE EUROPEENNE**

Numéro de la demande

EP 04 00 9796

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | VESELOVSKY G ET AL: "A study of the permutation capability of a binary hypercube under deterministic dimension-order routing" PROCEEDINGS OF THE ELEVENTH EUROMICRO CONFERENCE ON PARALLEL, DISTRIBUTED AND NETWORK-BASED PROCESSING, 5 février 2003 (2003-02-05), pages 173-177, XP010629559 * page 173, colonne 1, ligne 19 - colonne 2, ligne 32 * ----- | 1-10 | H04L9/06 |
| A | US 5 524 212 A (SOMANI ARUN K ET AL) 4 juin 1996 (1996-06-04) * colonne 2, ligne 31 - ligne 44 * * colonne 11, ligne 9 - ligne 51 * ----- | 1-10 | |
| A | US 6 219 421 B1 (BACKAL SHAUL O) 17 avril 2001 (2001-04-17) * colonne 1, ligne 49 - ligne 58 * * colonne 3, ligne 13 - ligne 30 * ----- | 1-10 | |

**DOMAINES TECHNIQUES RECHERCHES (Int.Cl.7)**

H04L

Le présent rapport a été établi pour toutes les revendications

| Lieu de la recherche | Date d'achèvement de la recherche | Examinateur |
|---|---|---|
| Munich | 15 octobre 2004 | Cretaine, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 00 9796

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-10-2004

| Document brevet cité au rapport de recherche | | Date de publication | Membre(s) de la famille de brevet(s) | | Date de publication |
|---|---|---|---|---|---|
| US 5524212 | A | 04-06-1996 | AUCUN | | |
| US 6219421 | B1 | 17-04-2001 | AU | 9454498 A | 17-05-1999 |
| | | | CA | 2307234 A1 | 06-05-1999 |
| | | | CN | 1279851 T | 10-01-2001 |
| | | | EP | 1025671 A1 | 09-08-2000 |
| | | | WO | 9922485 A1 | 06-05-1999 |
| | | | JP | 2001522056 T | 13-11-2001 |

EPO FORM P0460

Pour tout renseignement concernant cette annexe : voir Journal Officiel de l'Office européen des brevets, No.12/82